# EUROPEAN PATENT SPECIFICATION

(11) **EP 1 443 313 B1**
(45) Date of publication and mention of the grant of the patent: **28.03.2007**
(21) Application number: 03027263.7
(22) Date of filing: 28.11.2003
(51) Int. Cl.: G01F 1/708, G01F 1/712, A01J 5/01

(54) **Direct passage milk meter**
Direkt durchflossenes Milchmessgerät
Dispositif de mesure de lait à passage direct

(30) Priority: 30.01.2003 IT MI20030161
(43) Date of publication of application: 04.08.2004
(73) Proprietor: INTERPULS S.P.A., 42020 Albinea RE (IT)
(72) Inventor: Cattaneo, Marco, 20025 Legnano (MI) (IT); Zaninelli, Mauro, 20162 Milano (IT); Guidobono Cavalchini, Antoniotto, Cantalupo Ligure (AL) (IT); Sicuri, Roberto, 43100 Parma (IT); Nicolini, Gabriele, 42042 Fabbrico (RE) (IT)
(74) Representative: Giambrocono, Alfonso

(56) References cited:
- EP-A- 0 733 884
- EP-A- 1 155 610
- US-A- 5 245 946
- US-A1- 2002 156 589

## Description

The present invention relates to those devices, known as milk meters, which enable the quantity of milk produced by a single animal to be measured automatically.

In rearing milk-producing animals, real-time availability of production data enables considerable progress to be achieved in farm management, making it possible in particular to precisely follow the lactation curve of each animal, to hence enable any fall in production to be instantly identified. Determination of the milk quantity produced by an animal at each milking was initially achieved by simply collecting the milk produced in a graduated container and directly reading the corresponding milk volume against the graduated scale. This requires the presence of an operator to take the reading, with the possibility of operator error in reading and in recording the read value. It should also be noted that such a reading cannot possibly be taken with accuracy because of the presence of foam on the free surface of the milk, this making it difficult to distinguish the real level of the milk contained in said graduated container.

These drawbacks have been overcome by using the aforesaid milk meters, which are based on automatically counting how many times a determined measurement chamber, of predetermined volume (the filling of which defines the so-called volume portion), can be filled with the milk gradually produced by the animal during milking. For the same purpose, counting weight portions can be used instead of counting volume portions.

In milk meters using volume portions, an automatic count is made of the filling/emptying cycles of the measurement chamber, the filling of which determines the automatic opening of a discharge valve enabling it to be emptied. The number of these cycles is equal to the number of milk portions produced by the animal, from which its total milk production is obtained.

The use of these milk meters involves cyclic interruption of the milk flow during milking (to enable the measurement chamber to be emptied), the measurement hence being taken discontinuously. Such milk meters also. submit the milk to a mechanical action which can compromise its quality.

To overcome the aforesaid drawbacks, milk meters of so-called direct passage type have been recently introduced on the market. These milk meters use a method by which the flow of milk originating from the milking unit is passed through a conduit portion forming part of the milk meter, without interruption in the milk flow (from which the name "direct passage" derives).

Because of the manner in which the milking operation takes place, the milk flow passing through said conduit varies with time, so that within a determined section of said conduit the degree of filling of the conduit cross-section also varies with time. This milk meter is provided with a source of electromagnetic radiation which strikes the milk flow passing through the milk meter conduit. By instantaneously measuring the attenuation in the electromagnetic radiation due to the milk flow and its velocity, the instantaneous milk flow rate can be calculated.

A device of this type, usable as a direct passage milk meter, by which this drawback is overcome, is described in US 5 116 119, which also describes the relative measurement method. This device comprises: (a) means for directing the milk flow through a channel of predetermined dimensions; (b) a source of electromagnetic radiation to which the milk flowing through said channel is exposed; (c) means for continuously measuring the attenuation, due to the milk flow through the channel, of electromagnetic radiation directed through the channel interior; (d) means for measuring the transparency to electromagnetic radiation of the milk passing through the channel; (e) means for determining, by the measurements of the preceding points (c) and (d), the instantaneous flow rate of the milk flow passing through said channel; (f) means for determining the instantaneous velocity of the milk flow passing through said channel; and (g) means for determining, by means of the instantaneous volume determined by the means (e) and the instantaneous velocity determined by the means (f), the instantaneous flow rate of the milk flow passing through said channel.

In the milk meter which was actually marketed, and which corresponds to that illustrated in Figure 1 of US 5 116 119, the said channel (through which the milk flow from the milking unit passes) consists in practice of a plurality of parallel channels, the instantaneous electromagnetic radiation attenuation being measured in each of said channels.

The main limit of this milk meter is however the fact that the passage cross-section of the milk flow, equal to the sum of the cross-sections of said channels, is rather small, with the result that large fluctuations occur in the vacuum level within the milking unit. The fact that this milk meter presents a small total cross-section for passage of the milk flow is due to the need to limit both the number of electromagnetic radiation sensors (the greater the number of channels provided, the greater the number of sensors to be used), and the mass of data to be processed. As known to the expert of the art, fluctuations in the vacuum level within the milking unit constitute a serious drawback, which can affect the animal's health.

An other milk meter using electrodes can be found in the document US 5245946

The object of the present invention is to provide a milk meter of the direct passage type, which does not present the drawbacks of known milk meters of this type.

This object is attained by a milk meter according to the present invention, comprising a conduit through which the milk flow originating from the milking unit is passed,
characterised in that
the conduit extends roughly horizontally, a longitudinal wall extending along a determined length of the conduit to separate a lower portion of the internal cross-section of the conduit, this lower portion having an internal cross-section of sufficiently small area to be always completely occupied by the milk flow during the milking operation;
at least two reference electrodes and at least two pairs of measurement electrodes being provided, all these electrodes being connected to a data acquisition and processing unit able to determine with an adequate predetermined frequency the variation in the conductivity of the milk flow through the conduit, the reference electrodes being positioned within the lower portion of the conduit, the measurement electrodes being disposed within the conduit in such a manner as to be always in contact with the milk during milking, but outside said lower portion.

The reference electrodes have to provide an absolute value of the electrical conductivity of the milk in transit, and to achieve this they must be inserted into a measuring environment which is constant and is independent of the conduit filling levels. For this reason they are inserted into said lower portion of the conduit which is always completely filled with milk, even in the case of very low flows, and must enable the milk in , contact with the electrodes to undergo continuous passage and replacement, to offer to the electrodes the aforesaid constant environment independent of filling levels.

Consequently the said conduit is in practice divided into two conduits, namely: a main conduit through which most of the milk flow passes in the case of large flows and having a cross-section equal - apart from the area occupied by said longitudinal wall - to the internal cross-section of the entire conduit less the area of the cross-section occupied by said lower portion; and a secondary conduit consisting of said lower portion, in which the reference electrodes are located.

To prevent deposits forming on the electrodes and ensure that, as far as possible, their presence does not constitute a disturbance factor, their size and shape are established in accordance with the teachings of hydrodynamics.

The signal sensed by the data acquisition and processing unit via the reference electrodes is, for the aforesaid reason, independent of the filling level of the main conduit, this signal being usable to determine the instantaneous value of the electrical conductivity of the milk in transit.

The signal sensed by the said unit via the measurement electrodes is used instead for determining the area of the conduit cross-section occupied by the milk flow and its instantaneous velocity. In this respect, having a liquid of known conductivity constant with time, the intensity of the signal read via the measurement electrodes is proportional to the area of the conduit cross-section occupied by the liquid. If the electrical conductivity of the liquid is not known and/or can vary with time (as in the case of milk), to obtain the area of the cross-section occupied thereby, the signal originating from the measurement electrodes must be related to the instantaneous real conductivity measured by the reference electrodes.

The measurement electrodes are used to determine the instantaneous velocity of the milk flow. In the case of irregular flow with the main conduit only partly occupied by the milk flow and in the presence of air bubbles (a condition typically encountered in milking plants), the milk conductivity measurement obtained by the measurement electrodes shows continuous variations, with oscillations and peaks. Assuming that two pairs of measurement electrodes are available (however the two pairs could also have one electrode in common, so that in the limit three electrodes are sufficient), the signal variations are measured with reference to a first pair of electrodes and then across the second pair. Knowing the distance between the pairs of measurement electrodes and the time interval between the manifestation of an oscillation or a peak across the first pair and of the same oscillation or peak across the second pair of measurement electrodes, and knowing the distance between these pairs, the velocity of the milk flow can be easily determined. In other words, the flow velocity is obtained by quantifying the phase displacement of the signal provided by the two pairs of measurement electrodes.

Compared with known direct passage milk meters, the milk meter of the present invention does not cause oscillations in the vacuum level of the milking unit, as in practice it does not involve throttling of the milk flow (provided that the wall separating the lower channel portion, or secondary channel, from the rest of the channel, or main channel, is sufficiently thin and the electrodes are not too bulky).

The invention will be more apparent from the following description of one embodiment thereof given by way of example. In this description reference is made to the accompanying drawings, in which:
Figure 1 is an isometric view of that part of a milk meter of the present invention which is insertable into the pipe which in a milking plant carries the milk from a milking unit to the milk main or to a collection container, for simplicity neither the automatic data acquisition and data processing unit nor the relative connections being shown, as they are of completely conventional type;
Figure 2 is a side view thereof in the direction of the arrow 2 of Figure 1, for greater clarity the figure also showing the internal parts by dashed lines;
Figure 3 is a plan view from above, also showing the internal parts by dashed lines;
Figure 4 is an enlarged isometric view of that conduit part containing the reference electrodes, with the internal parts represented by dashed lines;
Figure 5 is a reduced side view thereof;
Figure 6 is a reduced view from above;
Figure 7 is an isometric view of that conduit part containing the measurement electrodes;
Figure 8 is a plan view thereof from above, with the internal parts represented by dashed lines.

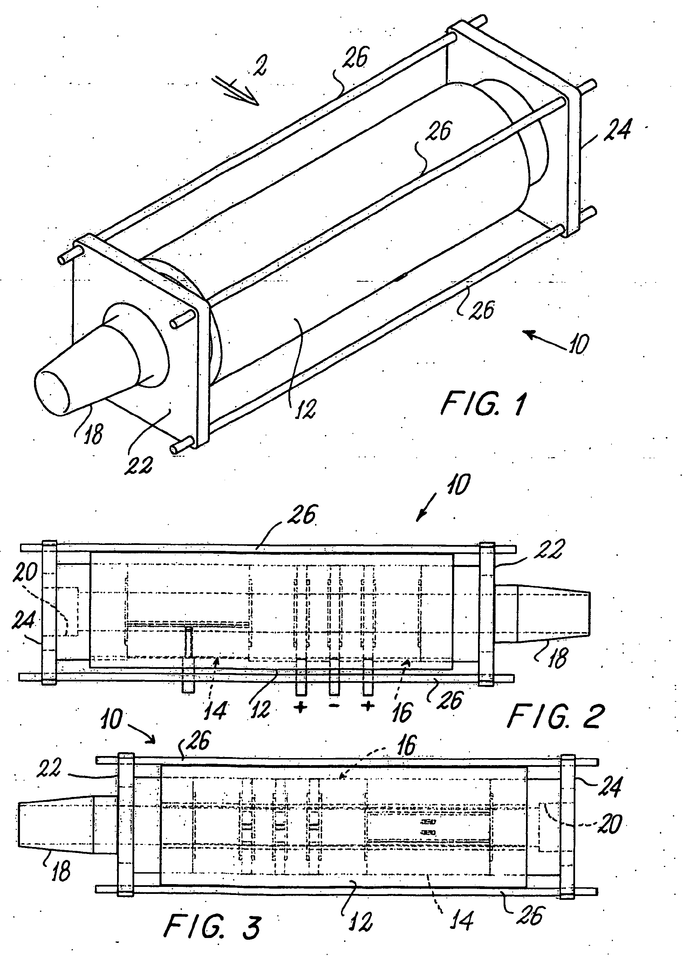

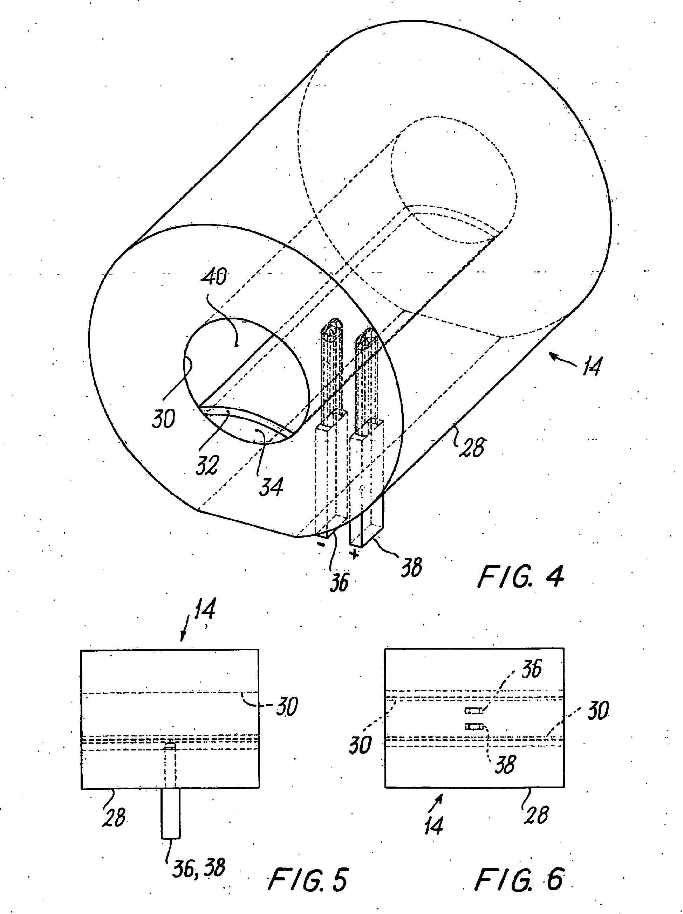

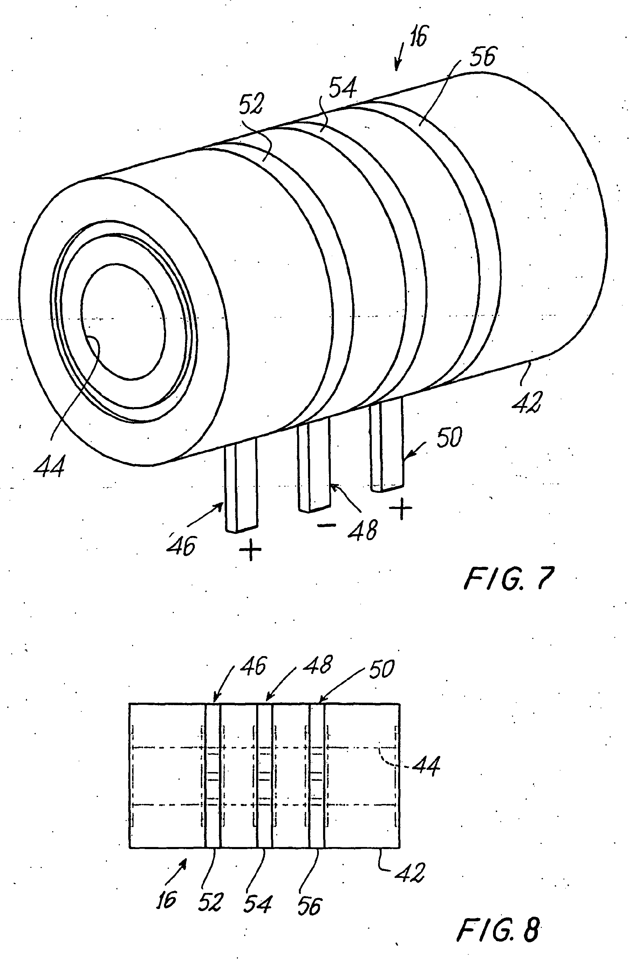

As can be seen from Figures 1-3, the milk meter comprises a device 10 to be inserted into that pipe (not shown) by which the milk is removed from the milking unit to a milk main or a collection container. The device 10 comprises in its turn an outer hollow cylindrical casing 12 containing in its interior a first conduit part 14 (best seen in Figures 4-6) in which the reference electrodes are provided, and a second conduit part 16 (best seen in Figures 7 and 8) in which the measurement electrodes are provided. The first part 14 and the second part 16 are disposed consecutively within the outer conduit 12, it not however being important whether the one is downstream of the other or vice versa.

The device 10 also comprises a connector at each of its two ends, namely a male connector 18 and a female connector 20, which enable the device 10 to be inserted into said pipe of the milking plant. Two end plates 22 and 24 with relative threaded tie rods 26 enable'the whole to be assembled to form the device 10.

The first part 14 (Figures 4-6) consists essentially of a cylindrical annular element presenting a cylindrical coaxial cavity 30 having a circular cross-section of dimensions substantially equal to those of the inner cross-section of the pipe into which the device 10 is to be inserted. In the cylindrical cavity 30 there is however present a wall or baffle 32, which in this specific case is slightly arched, to separate a lower portion 34 (or tunnel) of the cylindrical cavity 30 from the rest of the cavity. The upper ends of two electrodes 36 and 38 project into said tunnel. As already stated, the area of the cross-section of the lower portion 34 is established such that the tunnel 34 is always completely filled with milk during the milking stage, whereas the remaining part 40 of the cavity 30, which is above the arched wall 32, may be only partly filled with milk. In any event the area of the cross-section of the remaining part 40 must be such as to allow the entire maximum milk flow to pass without constituting a constriction which would lead to fluctuations in the level of vacuum present in the milking unit.

With regard to the second part (Figures 7 and 8), this comprises a cylindrical annular element 42 presenting a cylindrical coaxial cavity 44. The cylindrical element 42 incorporates three measurement electrodes 46, 48 and 50, which form the two pairs (46, 48 and 48, 50) of measurement electrodes required by the milk meter of the present invention. These electrodes have a concentric annular part 52, 54 and 56 respectively, the inner surface of which forms part of the inner surface of the cylindrical element 42. Consequently the milk passing through the cavity 44 makes contact with these electrodes.

The milk meter of which the device 10 forms part is completed, as already stated, by an automatic data acquisition and data processing unit (preferably of the microprocessor type), and relative electrical connections to said electrodes, the said unit and connections not being shown as they are entirely of conventional type.

The operation of the milk meter of which the device 10 forms part is apparent to an expert of the art from the aforegoing description and will therefore not be further described:

## Claims

1. A direct passage milk meter, comprising a conduit (10) through which the milk flow originating from the milking unit is passed, with measurement electrodes being disposed within the conduit,
**characterised in that**
the conduit (10) extends roughly horizontally, a longitudinal wall (32) extending along a determined length (14) of the conduit (10) to separate a lower portion (34) of the internal cross-section of the conduit, this lower portion (34) having an internal cross-section of sufficiently small area to be always completely occupied by the milk flow during the milking operation;
at least two (36, 38) reference electrodes and at least two pairs-(46, 48 and 48, 50) of measurement electrodes being provided, all these electrodes (36, 38, 46, 48, 50) being connected to a data acquisition and processing unit able to determine with an adequate predetermined frequency the variation in the conductivity of the milk flow through the conduit (10), the reference electrodes (36, 38) being positioned within the lower portion (34) of the conduit (10), the measurement electrodes (46, 48, 50) being disposed within the conduit (10) in such a manner as to be always in contact with the milk during milking, but outside said lower portion (34).

2. A milk meter as claimed in claim 1, wherein the conduit (10) through which the milk flow passes is divided into: a main conduit (40) through which most of the milk flow passes in the case of large flows and having a cross-section equal - apart from the area occupied by said longitudinal wall (32) - to the internal cross-section of the entire conduit (10) less the area of the cross-section occupied by said lower portion (34); and a secondary conduit consisting of said lower portion (34), in which the reference electrodes (36, 38) are located.

3. A milk meter as claimed in claim 1, wherein the two pairs of measurement electrodes consist of three electrodes (46, 48, 50), the intermediate electrode (48) forming part of both pairs.

4. A milk meter as claimed in claim 1, comprising an automatic data acquisition and data processing unit.

5. A milk meter as claimed in claim 4, wherein the data acquisition and processing unit is of the microprocessor type.

## Patentansprüche

1. Direkt durchflossenes Milchmessgerät, welches eine Leitung (10) umfasst, durch welche die Milch von der Melkeinheit fließt, wobei Messelektroden in der Leitung angeordnet sind,
**dadurch gekennzeichnet,**
**dass** sich die Leitung (10) näherungsweise horizontal erstreckt, wobei sich eine Längswand (32) entlang einer bestimmten Länge (14) der Leitung (10) derart erstreckt, dass sie einen unteren Abschnitt (34) des inneren Querschnitts der Leitung abtrennt, wobei dieser untere Abschnitt (34) einen inneren Querschnitt eines ausreichend kleinen Bereichs aufweist, um immer vollständig von dem Milchfluss während des Melkvorgangs belegt zu sein;
**dass** mindestens zwei (36, 38) Referenzelektroden und mindestens zwei Paare (46, 48 und 48, 50) von Messelektroden vorhanden sind, wobei alle diese Elektroden (36, 38, 46, 48, 50) mit einer Datenaufnahme- und Verarbeitungseinheit verbunden sind, welche in der Lage ist, mit einer angemessenen vorbestimmten Frequenz die Veränderung in der Leitfähigkeit des Milchflusses durch die Leitung (10) zu bestimmen, wobei die Messelektroden (46, 48, 50) in solch einer Weise in der Leitung (10) aber außerhalb des unteren Abschnitts (34) angeordnet sind, dass sie sich während eines Melkens immer in Kontakt mit der Milch befinden.

2. Milchmessgerät nach Anspruch 1, wobei die Leitung (10), durch welche der Milchfluss verläuft, geteilt ist in: eine Hauptleitung (40), durch welche das meiste des Milchflusses für den Fall von großen Flüssen fließt und welche einen Querschnitt aufweist, welcher gleich - außer dem Bereich, welcher durch die Längswand (32) eingenommen wird, - dem inneren Querschnitt der gesamten Leitung (10) abzüglich des Bereiches des Querschnitts, welcher von dem unteren Abschnitt (34) eingenommen wird, ist; und eine zweite Leitung, welche aus dem unteren Abschnitt (34) besteht, in welchem die Referenzelektroden (36, 38) angeordnet sind.

3. Milchmessgerät nach Anspruch 1, wobei die zwei Paare von Messelektroden aus drei Elektroden (46, 48, 50) bestehen, wobei die mittlere Elektrode (48) einen Teil von beiden Paaren ausbildet.

4. Milchmessgerät nach Anspruch 1, welches eine automatische Datenaufnahme- und Datenverarbeitungseinheit umfasst.

5. Milchmessgerät nach Anspruch 4, wobei die Datenaufnahme- und Verarbeitungseinheit von dem Typ eines Mikroprozessors ist.

## Revendications

1. Dispositif de mesure de lait à passage direct, comprenant un conduit (10) à l'intérieur duquel circule l'écoulement de lait provenant de l'unité de traite, comprenant des électrodes de mesure qui sont disposées à l'intérieur du conduit, **caractérisé en ce que** :
le conduit (10) s'étend approximativement horizontalement, une paroi longitudinale (32) s'étendant le long d'une longueur déterminée (14) du conduit (10) pour séparer une partie inférieure (34) de la section transversale interne du conduit, cette partie inférieure (34) ayant une section transversale interne de surface suffisamment petite pour être toujours complètement occupée par l'écoulement de lait pendant l'opération de traite,
au moins deux (36, 38) électrodes de référence et au moins deux paires (46, 48 et 48, 50) d'électrodes de mesure sont prévues, toutes ces électrodes (36, 38 , 46, 48 , 50) étant raccordées à une unité de traitement et d'acquisition de données pouvant déterminer avec une fréquence prédéterminée adéquate, la variation de la conductivité de l'écoulement de lait à travers le conduit (10), les électrodes de référence (36, 38) étant positionnées dans la partie inférieure (34) du conduit (10), les électrodes de mesure (46, 48, 50) étant disposées dans le conduit (10) afin d'être toujours en contact avec le lait pendant la traite, mais à l'extérieur de ladite partie inférieure (34).

2. Dispositif de mesure de lait selon la revendication 1, dans lequel le conduit (10) à l'intérieur duquel passe l'écoulement de lait, est divisé en un conduit principal (40) à travers lequel la majeure partie de l'écoulement de lait passe dans le cas des grands écoulements et ayant une section transversale égale - à distance de la zone occupée par ladite paroi longitudinale (32) - à la section transversale interne de tout le conduit (10) moins la région de section transversale occupée par ladite partie inférieure (34) ; et en un conduit secondaire se composant de ladite partie inférieure (34), dans laquelle les électrodes de référence (36, 38) sont situées.

3. Dispositif de mesure de lait selon la revendication 1, dans lequel les deux paires d'électrodes de mesure se composent de trois électrodes (46, 48, 50), l'électrode intermédiaire (48) faisant partie des deux paires.

4. Dispositif de mesure de lait selon la revendication 1, comprenant une unité de traitement de données et d'acquisition de données automatique.

5. Dispositif de mesure de lait selon la revendication 4, dans lequel l'unité de traitement et d'acquisition de données est du type microprocesseur.
